(19) Europäisches Patentamt
European Patent Office
Office européen des brevets

(11) Veröffentlichungsnummer: **0 045 905**
**B1**

(12) # EUROPÄISCHE PATENTSCHRIFT

(45) Veröffentlichungstag der Patentschrift: **25.04.84**

(51) Int. Cl.³: **C 08 F 38/02,** C 08 F 4/68, C 08 J 5/18

(21) Anmeldenummer: **81105994.8**

(22) Anmeldetag: **30.07.81**

(54) **Herstellung von Polyacetylen.**

(30) Priorität: **09.08.80 DE 3030193**

(43) Veröffentlichungstag der Anmeldung: **17.02.82 Patentblatt 82/7**

(45) Bekanntmachung des Hinweises auf die Patenterteilung: **25.04.84 Patentblatt 84/17**

(84) Benannte Vertragsstaaten: **AT CH DE FR GB IT LI**

(56) Entgegenhaltungen:
**FR - A - 1 149 218**

**JOURNAL OF POLYMER SCIENCE, Polymer Chemistry Edition, Band 12, Nr. 1, Januar 1974, Seiten 11-20, New York, U.S.A. TAKEO ITO et al.: "Simultaneous polymerization and formation of polyacetylene film on the surface of concentrated soluble Zieglertype catalyst solution"**

(73) Patentinhaber: **BAYER AG, Konzernverwaltung RP Patentabteilung, D-5090 Leverkusen 1 Bayerwerk (DE)**

(72) Erfinder: **Hocker, Jürgen, Dr., Eichenweg 6, D-5060 Bergisch-Gladbach 2 (DE)**
Erfinder: **Wieder, Wolfgang, Dr., 16, Résidence de la Côte Blanche, F-76170 Lillebonne (FR)**
Erfinder: **Merten, Rudolf, Dr., Berta-von-Suttner-Strasse 55, D-5090 Leverkusen 1 (DE)**
Erfinder: **Witte, Josef, Dr., Haferkamp 10, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 045 905 B1

BUNDESDRUCKEREI BERLIN

## Herstellung von Polyacetylen

Gegenstand der Erfindung ist ein Verfahren zur Herstellung von Polyacetylen, das dadurch gekennzeichnet ist, daß man Acetylen in einem organischen Verdünnungsmittel, unter ständigem Durchmischen, in Gegenwart eines metallorganischen Katalysators auf Vanadiumbasis polymerisiert. Die erhaltene Suspension von faserförmigen Polyacetylenteilchen kann man unter Vereinigung der suspendierten Teilchen und Entfernung des Verdünnungsmittels in eine Folie umwandeln.

Die Polymerisation von Acetylen an metallorganischen Mischkatalysatoren ist bekannt. Journal Polymer Science, Band 12, Seiten 11 bis 20, gibt den bisherigen Stand der Entwicklung wieder. Polyacetylen ist in allen Lösungsmitteln unlöslich und fällt bei der Polymerisation von Acetylen an metallorganischen Mischkatalysatoren im allgemeinen als nicht verarbeitbares Pulver an. Die Polymerisation von Acetylen wird im allgemeinen durchgeführt, indem man Acetylengas unter anaeroben Bedingungen in eine Lösung eines metallorganischen Mischkatalysators in einem Lösungsmittel einleitet. Geeignete metallorganische Mischkatalysatoren — auch als Zieglerkatalysatoren bezeichnet — werden durch Umsetzung einer Verbindung eines der Metalle Titan, Vanadium, Chrom, Eisen, Kobalt oder Mangan (z. B. eines Halogenids, eines Esters oder eines Salzes mit einer organischen Säure) mit einem Aluminiumalkyl erhalten. Diese Polymerisation, die im allgemeinen bei starkem Durchmischen des Polymerisationsmediums ausgeführt wird, liefert das Polyacetylen in Form eines nicht weiter verarbeitbaren Pulvers. Um Polyacetylen in einer verwendbaren Form, beispielsweise als Folie, zu erhalten, muß man auf die Durchmischung verzichten und Katalysatoren vom Typ

$$Ti(OC_4H_9)_4/Al(C_2H_5)_3$$

— also Katalysatoren auf Basis von Titanverbindungen und Aluminiumalkylen — benutzen.

Leitet man Acetylen über eine Lösung dieses Katalysators in einem organischen Lösungsmittel, dann bildet sich ein Polyacetylenfilm an der Oberfläche, wenn man Agitation des Mediums sorgfältig vermeidet. Dieser Film kann abgehoben und untersucht werden. Offensichtlich sind aber größere Flächen auf diese Weise nicht herstellbar, und die Dicke des Films festzulegen ist schwierig.

Erfindungsgemäß kann man Polyacetylen in Form faserförmiger Teilchen herstellen. Um dies zu erreichen, stellt man zunächst eine Lösung eines bestimmten metallorganischen Katalysators in einem inerten Lösungsmittel her und leitet unter starkem Durchmischen gasförmiges Acetylen ein. Man verwendet bevorzugt einen Katalysator aus 0,05 bis 0,2 Mol Vanadiumverbindung der Formel

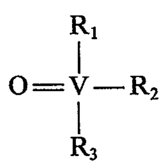

worin

$R_1$ Halogen (Chlor),
$R_2$, $R_3$ Halogen (Chlor), $OR_5$ ($R_5 = C_1 - C_{20}$-Alkyl, geradkettig, cyclisch oder verzweigt),
$R_2$ und $R_3$ gleich oder voneinander verschieden

mit 0,1 bis 20, bevorzugt 1 bis 10 Mol

$Al(R_4)_3$
$AlX(R_4)_2$,
$AlX_2(R_4)$,
$Al_2X_3(R_4)_3$;

$R_4$ $C_1 - C_{12}$-Alkyl, bevorzugt Methyl, Ethyl, Isobutyl, Octyl,
X Halogen.

Besonders geeignete Vanadiumverbindungen sind:

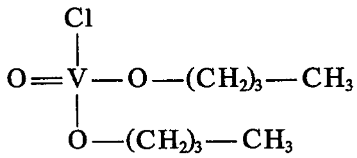

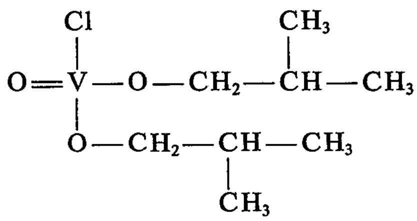

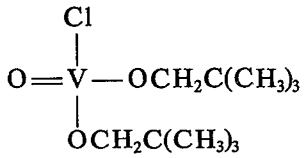

Besonders geeignete Aluminiumalkyle sind:
Triethylaluminium,
Triisobutylaluminium,
Trioctylaluminium.

Geeignete Lösungsmittel sind insbesondere Kohlenwasserstoffe wie Benzol, Toluol, Hexan, Tetralin, Dekalin, halogenierte Kohlenwasserstoffe wie Methylenchlorid, Chlorbenzol.

Die Katalysatoren werden durch Umsetzung der Vanadiumverbindung und der Aluminiumverbindung im Lösungsmittel bei Temperaturen von −100 bis +30° C in an sich bekannter Weise hergestellt. Zur nachfolgenden Polymerisation benutzt man im allgemeinen Lösungen, die 5 bis 100 mMol Aluminium pro Liter Lösungsmittel enthalten. In diese Lösung wird Acetylen unter anaeroben Bedingungen eingeleitet, bei Temperaturen von −100 bis +80° C, bevorzugt −100 bis −30° C. Es entsteht dabei eine Suspension von Polyacetylenteilchen. Die suspendierten Teilchen sehen unter dem Mikroskop wie kleine Kletten aus. Durch Abfiltrieren der Polymerisationsflüssigkeit im Vakuum (Absaugen) bildet sich aus diesen »Kletten« ein zusammenhängender Belag, eine Folie, die von ihrer Unterlage (Filterpapier) abgehoben werden kann.

## Ausführungsbeispiel

In einer 2-1-Becherglasrührapparatur werden 1,3 l Toluol vorgelegt und unter einem Stickstoffstrom 300 ml Toluol abdestilliert. Mit Trockeneis wird auf −78° C gekühlt und 4 ml (2 mMol). Bis-(2,2-dimethylpropoxi)-vanadiumoxichlorid 0,5 molar in Toluol und 20 ml (20 mMol) Aluminiumtriisobutyl 1 molar in Toluol zugesetzt. Die Apparatur steht dabei ständig unter einem Stickstoffstrom. Mit einer Geschwindigkeit von 10 l pro Stunde wird unter Rühren 1 Stunde reines Acetylen durchgeleitet. Das Polyacetylen fällt als schwarzer Niederschlag aus, der unter dem Mikroskop wie dunkelviolette Kletten aussieht.

Die Reaktion wird mit 0,5 g 4-Methyl-2,6-di-tert.-butyl-phenol (Ionol) in 400 ml absolutem Toluol abgestoppt, das Reaktionsgemisch mit Stickstoff ausgeblasen, wobei die Temperatur auf 20° C ansteigt.

Das Polyacetylenpulver wird abgesaugt und mehrmals mit Toluol gewaschen. Dabei bildet sich auf dem Filterpapier eine Polyacetylenfolie, die sich nach dem Trocknen leicht als stabile Folie abheben läßt.

**Patentansprüche**

1. Verfahren zur Herstellung von faser- oder klettenförmigem Polyacetylen, dadurch gekennzeichnet, daß man Acetylen in einem organischen Verdünnungsmittel in Gegenwart eines metallorganischen Mischkatalysators aus

a) einer Vanadiumverbindung der Formel

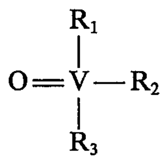

worin

$R^1$ für Halogen (z. B. Chlor)
$R^2$ und $R^3$ für Halogen (z. B. Chlor), $OR^5$($R^5 = C_1-C_{20}$-Alkyl, geradkettig, cyclisch oder verzweigt) steht, wobei
$R^2$ und $R^3$ gleich oder verschieden sein können
und aus
b) einer Alkylaluminium-Verbindung polymerisiert.

2. Verfahren nach Anspruch 1, dadurch gekennzeichnet, daß das Polyacetylen in Form einer papierähnlichen Folie hergestellt wird.

3. Verfahren nach Anspruch 1, dadurch gekennzeichnet, daß der metallorganische Mischkatalysator durch Umsetzung von 0,05–0,2 Mol Vanadiumverbindung mit 0,1–20 Mol Aluminiumverbindung hergestellt worden ist.

## Claims

1. Process for the production of fibre- or burr-shaped polyacetylene, characterised in that acetylene is polymerised in an organic diluent in the presence of an organometallic mixed catalyst based on

a) a vanadium compound of the formula

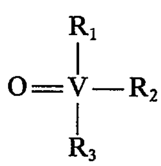

wherein

$R^1$ represents halogen (e. g. chlorine)
$R^2$ and $R^3$ represent halogen (e. g. chlorine), $OR^5$($R^5 = C_1-C_{20}$-alkyl, straight-chain, cyclic or branched) it being possible for
$R^2$ and $R^3$ to be identical or different,
and
b) an alkyl aluminium compound.

2. Process according to Claim 1, characterised in that the polyacetylene is produced in the form of a paper-like film.

3. Process according to Claim 1, characterised in that the organometallic mixed catalyst has been prepared by reacting 0.05–0.2 mols of a vanadium compound with 0.1–20 mols of an aluminium compound.

## Revendications

1. Procédé de production de polyacétylène sous forme de fibres ou en »crochets de bardane«, caractérisé en ce qu'on polymérise de l'acétylène dans un diluant organique en présence d'un catalyseur mixte organométallique formé

a) d'un composé de vanadium de formule

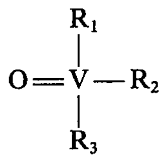

dans laquelle

$R^1$ est un halogène (par exemple le chlore)

$R^2$ et $R^3$ représentent un halogène (par exemple le chlore), un groupe $OR^5$($R^5$=groupe alkyle en $C_1$ à $C_{20}$ à chaîne droite, cyclique ou ramifié),
$R^2$ et $R^3$ pouvant être égaux ou différents,

et

b) d'un composé alkylique d'aluminium.

2. Procédé suivant la revendication 1, caractérisé en ce que le polyacéthylène est préparé sous la forme d'une feuille ayant l'aspect du papier.

3. Procédé suivant la revendication 1, caractérisé en ce que le catalyseur mixte organométallique a été préparé par réaction de 0,05 à 0,2 mole de composé de vanadium avec 0,1 à 20 moles de composé d'aluminium.